# EUROPEAN PATENT APPLICATION

(11) **EP 2 936 995 A1**
(43) Date of publication of application: **28.10.2015**
(21) Application number: 13864650.0
(22) Date of filing: 18.12.2013
(51) Int. Cl.: A23K 1/18, A23K 1/16

(54) **METHOD FOR PRODUCING PET FOOD, AND PET FOOD**

(30) Priority: 19.12.2012 JP 2012277503
(71) Applicant: Unicharm Corporation, Shikokuchuo-shi, Ehime 799-0111 (JP)
(72) Inventor: UCHII, Sayaka, Itami-shi Hyogo 664-0831 (JP); IKEDA, Go, Itami-shi Hyogo 664-0831 (JP)
(74) Representative: Peter, Julian
(86) International application number: PCT/JP2013/083849
(87) International publication number: WO 2014/098110

(57) **Abstract**

To provide a method of producing pet food with superior preference qualities. A pet food production method includes: a kneading step of adding amino acid and reducing sugar to pet food raw materials and kneading to thereby obtain a kneaded food product; a granulating step of granulating the kneaded food product to thereby obtain food grains; and a baking step of baking the food grains by infrared rays. It is preferable that a plurality of types of amino acid is added in the kneading step.

## Description

### TECHNICAL FIELD

The present invention relates to a pet food production method and a pet food.

### BACKGROUND ART

Conventionally, dry-type pet food has been favorably used from the viewpoint of feeding to pets and easy storability. The dry-type pet food is superior in nutritional balance. However, the dry-type pet food may be inferior in preference qualities to wet-type pet food, depending on a production method thereof. Given this, a method of producing dry-type pet food which is superior in preference qualities is demanded.

For example, Patent Document 1 discloses a pet food production method of: granulating a pet food composition containing nutritionally balanced raw materials; drying to reduce moisture to no greater than 10%; heating at around 180°C; coating with oil; and further coating with additives having various flavors.

Patent Document 1: Japanese Registered Patent No. 2629003

### DISCLOSURE OF THE INVENTION

### Problems to be Solved by the Invention

However, in the method disclosed in Patent Document 1, flavor of a surface of a grain of the pet food is improved by roasting; however, it is difficult to heat the grain evenly to the inside. If the grains of the pet food are not evenly heated to the inside, an effect of improving the preference qualities is insufficient.

As described above, there is currently not a method of producing pet food having satisfactory preference qualities.

The present invention is made in view of the abovementioned situation and is aimed at providing a method of producing pet food with superior preference qualities.

### Means for Solving the Problems

(1) A pet food production method comprising: a kneading step of adding an amino acid and a reducing sugar to a pet food raw material and kneading to thereby obtain a kneaded food product; a granulating step of granulating the kneaded food product to thereby obtain food grains; and a baking step of baking the food grains by infrared rays.
(2) The pet food production method according to (1), wherein a plurality of types of amino acids is added in the kneading step.
(3) The pet food production method according to (1) or (2), wherein at least 0.5 parts by mass and no greater than 5.0 parts by mass in total of the amino acid and the reducing sugar is added in the kneading step.
(4) The pet food production method according to any one of (1) to (3), wherein the food grains are baked, in the baking step, by placing the food grains on a grill and irradiating with infrared rays from above and below the grill.
(5) A pet food, wherein the pet food is produced by the pet food production method according to any one of (1) to (4).

### Effects of the Invention

The present invention can provide a method of producing pet food with superior preference qualities.

### BRIEF DESCRIPTION OF THE DRAWINGS

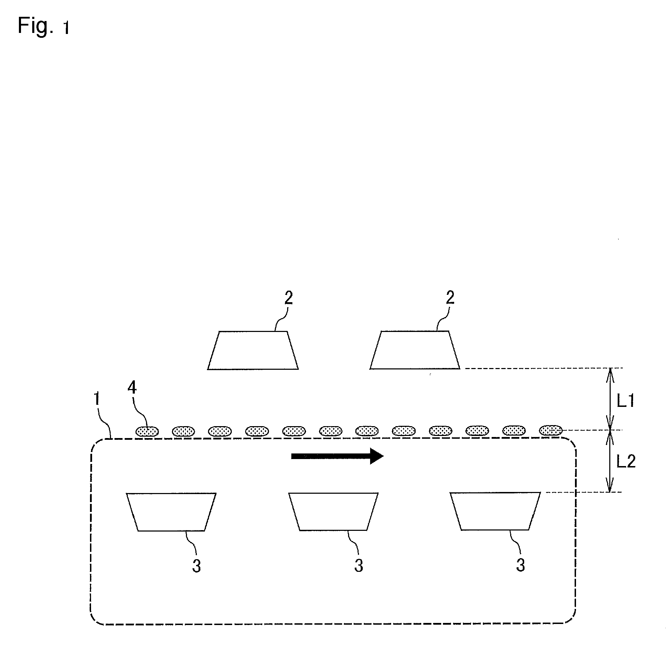

FIG. 1 is a schematic view for illustrating the baking step in the pet food production method according to an embodiment of the present invention.

### PREFERRED MODE FOR CARRYING OUT THE INVENTION

An embodiment of the present invention is described in detail hereinafter; however, it should be noted that the present invention is not limited thereto, and can be changed and implemented as necessary to implement in the scope of the objective of the present invention.

### Production Method of Pet Food

The pet food production method according to the present embodiment includes a kneading step, a granulating step, and a baking step.

The pet food in the present embodiment is a so-called dry-type pet food with no greater than 12% by mass of moisture for cats and dogs.

The kneading step is a step of adding an amino acid and a reducing sugar to pet food raw materials and kneading to thereby obtain a kneaded food product.

In the present embodiment, the pet food raw materials are raw materials other than raw materials used for adding the amino acid and the reducing sugar described later, among raw materials used for producing the pet food.

As the pet food raw materials, raw materials generally used for pet food can be exemplified. Important nutrients contained in the raw materials are protein and carbohydrate.

As the protein, plant-derived protein, animal-derived protein, or a mixture thereof can be exemplified. More specifically, as the plant-derived protein, gluten, wheat protein, soy protein, rice protein, corn protein and the like can be exemplified. As the animal-derived protein: protein from muscle and organs of beef, pork, chicken and fish; milk protein; or a mixture thereof can be exemplified. These proteins may contain fat, vitamins, iron and the like and can be used as a nutritional source.

As the carbohydrate, carbohydrate from grains such as corn, wheat, barley, oat, rice, soy and the like can be preferably exemplified. These grains may contain, in addition to carbohydrates, proteins, ash, minerals, vitamins and the like and can be used as a nutritional source.

In addition to the proteins and the carbohydrates, vitamins, minerals, salts, fat, extract of animal protein, and the like can be added as the raw materials to the mixture. An example formulation of the pet food raw materials is shown in Table 1.

**[Table 1]**

| | Composition for cats | Composition for dogs |
|---|---|---|
| Cereals (Corn, Wheat flour, Corn gluten meal, Soy, etc.) | 55-75% | 65-85% |
| Meats (Chicken meal, Pork meal, etc.) | 10-25% | 7-20% |
| Fishes (Fish meal, etc.) | 5-15% | 2-10% |
| Vitamins, Minerals (Separate vitamins for cats and dogs) | 2-5% | 2-5% |
| Total | 100% | 100% |

The amino acid to be added to the pet food raw materials is not particularly limited. The amino acid can be added in the form of a known additive composed mainly of amino acid. As the amino acid to be added to the pet food raw materials in the kneading step, glycine, valine, phenylalanine, lysine, arginine, cysteine, proline, histidine, tyrosine, leucine, isoleucine, methionine, alanine, glutamic acid, serine, threonine, aspartic acid and the like can be exemplified. The amino acid can be used singly or in combination of two or more types. In a case of using a combination of two or more types, protein hydrolysate can be used as a mixture of two or more types of amino acids. From the viewpoint of further improving the preference qualities of the pet food, it is preferable to add a plurality of types of amino acids in the kneading step. The additive composed mainly of amino acid can contain a component other than amino acid.

With the amino acid being added to the kneaded food product, the kneaded food product of the present embodiment contains a large amount of amino acid. With the kneaded food product containing large amounts of the amino acid and the reducing sugar (described later), the Maillard reaction proceeds smoothly in the baking step (described later). As a result, the pet food of the present embodiment is extremely high in preference qualities.

It is preferable that at least 0.2 parts by mass and no greater than 2.0 parts by mass of the amino acid with respect to the pet food raw materials being 100 parts by mass is added in the kneading step. In a case in which the added amount of the amino acid is smaller than 0.2 parts by mass with respect to the pet food raw materials being 100 parts by mass, the Maillard reaction tends not to proceed smoothly in the baking step described later; and in a case in which the amount of the amino acid is greater than 2.0 parts by mass, an effect of the Maillard reaction is not expected to be further increased.

It should be noted that, as used herein, the added amount of the amino acid is an added amount of the amino acid excluding amino acids derived from the pet food raw materials.

In the kneading step, the reducing sugar is further added. The reducing sugar thus kneaded in causes the Maillard reaction to occur with the amino acid added to the pet food raw materials in the kneaded food product, the amino acids derived from the pet food raw materials, protein hydrolysate, or protein in the baking step described later, and can thus generate a larger amount of fragrant aroma components which may improve consumption by pets. The aroma components diffuse along with moisture, as moisture evaporates from the food grains. A fragrant pet food is thus obtained.

The reducing sugar includes aldose having an aldehyde group or ketose having a ketone group, upon ring opening of sugar having a cyclic structure.

As the reducing sugar, monosaccharides such as glucose, fructose, and arabinose; disaccharides such as lactose and maltose; and other oligosaccharides can be exemplified.

Molecular weight of the reducing sugar is often no greater than 1000; however, isomerized sugar, which is a type of reducing sugar, may include reducing sugar having molecular weight greater than 1000.

An added amount of the reducing sugar with respect to the pet food raw material is not particularly limited; however, from the viewpoint of smoothly driving the Maillard reaction, an amount of at least 0.3 parts by mass and no greater than 3.0 parts by mass with respect to the pet food raw materials being 100 parts by mass is preferable. It should be noted that, in a case with reducing sugar containing molecular crystallized water such as hydrous glucose, an added amount including the molecular crystallized water is the "added amount of the reducing sugar". The reducing sugar can be used singly or in combination of two kinds or more.

It is preferable that at least 0.5 parts by mass and no greater than 5.0 parts by mass in total of the amino acid and the reducing sugar with respect to the pet food raw materials being 100 parts by mass is added in the kneading step. In a case in which the added amount of the amino acid and the reducing sugar is smaller than 0.5 parts by mass in total with respect to the pet food raw materials being 100 parts by mass, the Maillard reaction tends not to proceed smoothly in the baking step described later; and in a case in which the amount of the amino acid and the reducing sugar is greater than 5.0 parts by mass in total, an effect of the Maillard reaction is not expected to be further increased.

A kneading method in the kneading step is not particularly limited, and a method of adding powdered or liquid amino acid dissolved in water and the like to the raw materials and then kneading can be exemplified.

The kneaded food product is obtained by kneading the pet food raw materials, the amino acid, and the reducing sugar in a desired composition ratio.

During kneading, water, vegetable oil, animal oil and fat, and the like can be added as appropriate. As a method of obtaining the kneaded food product, a known method of pulverizing the raw materials and then kneading with a mixer and the like can be employed.

The granulating step is a step of granulating the kneaded food product to thereby obtain food grains.

A method of granulating the kneaded food product is not particularly limited; however, granulating by a method using an extruder is preferable.

As used herein, "to granulate" means to shape the kneaded food product into a shape and size suitable for pets consumption. In the present embodiment, the shape of the food grains is not particularly limited. As the shape of the food grains, a spherical shape, a pillar shape, a doughnut shape, a plate shape, a go-stone shape and the like can be exemplified. With regard to the size, the food grains to be shaped can be either small grains allowing pets to consume in one bite or large grains allowing pets to bite thereinto for multiple times.

The shape of the food grains is not particularly limited; however, a disk shape of which minimum diameter and maximum diameter are 3 mm to 30 mm, with central portions of upper and lower faces thereof being bulged (go-stone shape), is preferable. With such a shape, the food grains can be fully heated to the inside in the subsequent baking process, and more aroma components such as pyrazines can be generated in the food grains.

The shape of the food grains can also be in a plate shape, a pillar shape, or a tube shape which are too large for pets to consume. In this case, it is preferable to divide the food grains into smaller pieces of a shape that facilitates consumption by pets, after any one of the subsequent drying process and baking step.

In the granulating step, by performing a heating process during molding (shaping) and granulation of the kneaded product, carbohydrates in the kneaded food product can be gelatinized. By the gelatinization, flavor and texture of the food grains obtained are improved and the pet food also becomes easier to digest.

Temperature and duration of the heating process during the granulating step are not particularly limited; however, it is preferable that the temperature is no greater than 150°C from the viewpoint of smooth gelatinization of carbohydrates in the kneaded food product. The duration of the heating process is preferably 1 to 10 minutes and more preferably 2 to 5 minutes.

A temperature and a duration of the heating process of at least 70°C and at least 1 minute can sufficiently accelerate the gelatinization. A temperature and a duration of the heating process of no greater than 150°C and no greater than 10 minutes can prevent difficulty in granulation of the food grains due to excessive heating of the food grains.

In the granulating step, a process for drying the food grains can take place. Drying of the granulated food grains provides an effect of further accelerating generation of the aroma components such as pyrazines in the subsequent baking process. Here, a drying process in the granulating step is described; however, a drying step can be provided separately from the granulating step.

A method of drying the food grains is not particularly limited, and known methods such as a method of letting dry naturally, a method of drying by blowing hot air, a method of drying by reduced pressure, and a method of freeze-drying can be employed. Among these drying methods, the method of drying by blowing hot air can further improve flavor of the pet food.

Temperature of the food grains or temperature of the hot air to be blown onto the food grains upon drying of the food grains is not particularly limited. The temperature of the food grains or the temperature of the hot air to be blown onto the food grains upon drying of the food grains is preferably no higher than 150°C. A temperature of the food grains or a temperature of the hot air to be blown onto the food grains upon drying of the food grains of no higher than 150°C can prevent excessive heating of the food grains.

A temperature and a duration of at least 100°C and at least 1 minute can dry the food grains in a relatively short period of time. A temperature and a duration of no greater than 150°C and no greater than 120 minutes can prevent excessive heating of the food grains.

It should be noted that the temperature of the heating process and the temperature of the drying process can be either the same or different.

In the present embodiment, the moisture content of the food grains to be subjected to the baking step (described later) is preferably 6.0 to 12.0% by mass. By making the moisture content of the food grains within the above range, an amount of the aroma components such as pyrazines generated in the food grains by the subsequent baking process can further be increased. In addition, by making the moisture content of the food grains within the above range, flavor of the pet food can be improved and an effect of baking can be fully produced.

Surfaces of the food grains thus granulated can be coated with oil and fat prior to baking.

The type of the oil and fat to be added is not particularly limited and animal oil and fat as well as vegetable oil and fat can be exemplified. As the animal oil and fat, beef tallow, lard, chicken fat, fish fat and the like can be exemplified. Known meal extracts such as a chicken extract (extract derived from chicken meat) or a fish extract (extract derived from fish meat) can be added to the oil and fat.

A method of coating (attaching) the granulated food grains with the oil and fat is not particularly limited. As a method which can attach the oil and fat to at least a part of the surface of the food grains, a method of stirring heated and fluidized animal oil and fat with the food grains in a coating reel can be exemplified. Before or after stirring, by maintaining a state in which the fluidized animal oil and fat is attached to the surface of the food grains for a predetermined period of time (for example 1 to 30 minutes), it is possible to impregnate the food grains to the inside with at least a part of the oil and fat. The food grains can be impregnated either to a central part or only to a shallow part which is close to the surface thereof. From the viewpoint of further improving heating efficiency of the subsequent baking, it is preferable to impregnate the food grains to the inside with the oil and fat.

An added amount of the oil and fat in a pre-coating step is preferably 0 to 40.0% by mass with respect to a total mass of: the kneaded food product before granulation; oil and fat added in the pre-coating step; and oil and fat added in a subsequent coating step.

By attaching the oil and fat to at least the surfaces of the food grains in the pre-coating step, the heating efficiency of baking is improved and the food grains can be fully heated (cooked) to the inside in a shorter period of time. Furthermore, by coating at least a part of the surfaces of the food grains with the oil and fat, generation of powder of raw materials from the surfaces of the food grains due to friction between the food grains can be suppressed.

The baking step is a step of baking the food grains by infrared rays.

By baking the food grains by using infrared rays, the Maillard reaction can be accelerated and fragrant flavor of the pet food can be increased. The Maillard reaction is a reaction of generating a brown flavoring component observed in, for example, heating of reducing sugar with an amino compound (amino acid, pectin, and protein). Products of the Maillard reaction are not always obvious; however, pyrazines are also considered to be generated by the Maillard reaction.

As a result of adding the amino acid and the reducing sugar, the kneaded food product of the present embodiment contains large amounts of the amino acid and the reducing sugar, to thereby allow the Maillard reaction to smoothly proceed and a large amount of the amino acid, which is an umami component of the pet food, to remain. The pet food obtained by the pet food production method of the present embodiment is extremely superior in preference qualities thanks to fragrant flavor generated by the Maillard reaction and umami of the amino acid.

By baking the food grains by infrared rays, the food grains can be heated to the inside faster than grilling and roasting. In addition, in the present embodiment, the amino acid being kneaded into the kneaded food product can cause the Maillard reaction to proceed and can generate fragrant flavor even in the inside of the food.

FIG. 1 is a schematic view illustrating a configuration of a furnace of a baking device used in the baking step in the present embodiment.

The baking device is composed of a net conveyor 1 as a grill shape, a ceramic heater 2, and a ceramic heater 3.

The net conveyor 1 conveys the food grains 4.

The ceramic heater 2 irradiates the food grains 4 being conveyed by the net conveyor 1 with infrared rays from above.

The ceramic heater 3 irradiates the food grains 4 being conveyed by the net conveyor 1 with infrared rays from below.

As described above, by placing the food grains 4 on the net conveyor 1 (grill), conveying in a direction of an arrow shown in FIG. 1, and irradiating with infrared rays by means of the ceramic heaters 2 and 3 from above and below the net conveyor 1, the food grains can be well heated to the inside.

It should be noted that the ceramic heater 2 and the ceramic heater 3 are arranged alternately in a flow direction of the food grains 4 (direction of the arrow shown in FIG. 1). By arranging the ceramic heater 2 and the ceramic heater 3 alternately in the flow direction of the food grains 4, the food grains 4 can be baked evenly to the inside.

In a case of baking the food grains by radiation of infrared rays, it is preferable to bake the food grains by irradiating with infrared rays such that the atmospheric temperature is 160 to 230°C, from the viewpoint of improvement of flavor and texture.

As a method of baking the food grains by radiation of infrared rays, a method of placing the food grains in a furnace of the atmosphere (air atmosphere) of 160 to 230°C, while irradiating with infrared rays can be exemplified. In this case, for example, baking of the food grains at the atmospheric temperature of 160 to 230°C while irradiating with infrared rays can be realized by radiating infrared rays such that the temperature inside of the furnace prior to introduction of the food grains (temperature during empty furnace heating) is 200 to 330°C and then introducing the food grains into the furnace (atmosphere). It should be noted that, as a method of generating an atmosphere irradiated with infrared rays such that the temperature prior to introduction of the food grains is 200 to 330°C, a method of setting the temperature of an infrared irradiating device being used to 280 to 330°C can be exemplified. By introducing the food grains into the atmosphere of 200 to 330°C in the empty furnace heating state, the atmosphere is cooled to around 160 to 230°C by the food grains, influx of external air, and the like. In a case in which the food grains can be heated stably at 160 to 230°C, the temperature of the device can be set to 160 to 230°C. The temperatures exemplified here are shown in Table 2.

**[Table 2]**

| | Atmospheric temperature | Setting temperature of infrared irradiating device |
|---|---|---|
| Before introduction of food grains (During empty furnace heating) | 200-330°C | 280-330°C |
| After introduction of food grains (During continuous introduction of the food grains) | 160-230°C | 160-230°C |

Duration of baking of the food grains at the atmospheric temperature of 160 to 230°C by radiation of infrared rays can be adjusted appropriately according to size of the food grains. For example, in a case in which both the minimum diameter and the maximum diameter of the food grains are 3 mm to 30 mm, the duration of heating is preferably 20 to 55 seconds. Under such heating conditions, the food grains can be infallibly heated to the inside, and flavor and texture can be further improved. Meanwhile, with a temperature lower than 160°C or with a duration less than 20 seconds, inside of the food grains may be underbaked and flavor and texture may be poor. With a duration of baking longer than 55 seconds, the surface of the food grains may be heavily burned and unfavorable burnt odor may be generated.

By adjusting the speed of the net conveyor during conveyance of the food grains, the duration of heating of the food grains can be adjusted. By slowing down the net conveyor and extending the duration of heating, the moisture content of the food grains can be reduced.

As a radiation source of infrared rays, heated ceramic, heated quartz, or burning charcoal are used. With infrared rays emitted from ceramic or quartz heated by gas flame, heating wire, or the like, the food grains can be irradiated. It is preferable to employ a ceramic heater from the viewpoint of durability and infrared emission capability. Means of heating ceramic is preferably gas flame, from the viewpoint of plant investment and running cost.

A distance between the ceramic heater emitting infrared rays and a central part of the food grain (L1 and L2 in FIG. 1) is not particularly limited; however, 80 mm to 120 mm is preferable for sufficient heating of the pet food to the inside.

Water (moisture) can be added to the food grains baked in the baking step. By adding moisture to the food grains after baking, hardness of the food grains becomes similar to that before baking, and the food grains can be made easy to eat for pets. In addition, since the aroma components diffuse more as moisture evaporates from the food grains, appetite of pets can be stimulated by the aroma components and consumption by pets can be improved.

A method of adding moisture to the food grains obtained by baking is not particularly limited as long as the method can soak the food grain with water to achieve a predetermined moisture content. For example, a well-known coating reel, which is used for oil and fat coating described above, can be employed. Temperature of water to be added is not particularly limited and can be 10 to 40°C.

In a case of adding moisture to the food grains obtained by baking, the moisture content of the food grains after the addition of moisture is preferably 6 to 12% by mass, more preferably 7 to 11 % by mass, and further more preferably 8 to 10% by mass with respect to the mass of the food grains after the addition of moisture. By making the moisture content of the food grains within the above range, hardness of the food grains can be sufficiently alleviated and an appetite stimulating effect of the aroma components can be sufficiently obtained.

In addition, oil and fat can be added to the food grains obtained by adding moisture. By adding oil and fat, consumption by pets can be improved and calories of the pet food can be increased as necessary.

An added amount of the oil and fat in the coating step can be adjusted according to an added amount of the oil and fat in the above described pre-coating step. For example, as a total added amount of the oil and fat in the pre-coating step and in the coating step, 2.0 to 15.0% by mass with respect to the total mass of the food grains obtained after the coating step can be exemplified.

A type of the oil and fat to be added in the coating step is not particularly limited, and the same oil and fat as the oil and fat added in the pre-coating step can be employed. A method of coating the food grains to which moisture is added with the oil and fat is not particularly limited. For example, a method of addition by the above described coating reel can be employed.

Oil, fat and the like are heated upon addition to the food grains mainly for avoiding solidification thereof. Temperature of heating is not particularly limited as long as the temperature can accomplish this purpose. It is preferable that the temperature is as low as possible from the viewpoint of prevention of oxidization of the oil and fat, and the temperature can be 40 to 80°C, for example.

Content of the oil and fat added to the food grains can be adjusted as appropriate according to caloric design, and the oil and fat can be added such that total content of fat components (total fat content) in total mass of the pet food after production is 5 to 20% by mass.

It should be noted that a main component of the "fat" and "oil and fat" is glycerol ester of fatty acid (neutral fat).

### Pyrazines and Measurement Method of Pyrazines Content

In the present Specification, "pyrazines" designates pyrazines represented by a chemical formula C₄H₄N₂, as well as pyrazine derivatives in which at least one hydrogen atom in pyrazine is substituted by an alkyl group with 1 to 6 carbon atoms. The alkyl group with 1 to 6 carbon atoms can be either straight chain, branched chain, or cyclic, and a straight chain or branched chain alkyl group with 1 to 3 carbon atoms is preferable and a methyl group or ethyl group is more preferable. The number of hydrogen atoms to be substituted is preferably 1 to 3.

By including the above described pyrazines in the pet food, consumption by pets can be improved.

It is further preferable that the above described pyrazines are 2,5-dimethylpyrazin (2,5-DMP), 2,6-dimethylpyrazin (2,6-DMP), and/or 2,3,5-trimethylpyrazin (2,3,5-TMP). The food grains which are baked to include these pyrazines can further improve consumption by pets.

Contents of pyrazines in the food grains during production process and in the pet food after production can be measured by gas chromatography-mass spectrometry. More specifically, it is preferable to measure by the following solvent extraction method.

### (Solvent Extraction Method)

50 ml of water and 20 ml of diethyl ether are added to 2 to 10 g of a pet food sample to soak, stirred by a homogenizer while cooling in ice, 20 g of sodium chloride is added thereto, shaking extraction is performed for 10 minutes, and centrifugation is performed at 2000 rpm/min for 5 minutes. Diethyl ether layer is subjected to dewatering filtration and concentrated to 4 ml, to thereby obtain a test solution. A predetermined amount of the test solution is placed in a gas chromatography-mass spectrometer, mass spectra of peaks corresponding to pyrazines in the gas chromatogram are obtained, and substances are identified. From the gas chromatogram thus obtained, pyrazine content in the sample can be calculated. For example, by measuring baked food grains and unbaked food grains as samples, pyrazine content can be measured. Preferred conditions are shown below.

### (Operation Conditions of Gas Chromatography-Mass Spectrometer)

Model: 6890N/5975B interXL (Agilent Technologies, Inc.); Column: DB-WAX (Agilent Technologies, Inc.) ϕ 0.25 mm * 30 m, film thickness 0.25 µm; Injection amount: 1 µL; Introduction system: Split (1:5); Temperature: Sample inlet 220°C, Column 60°C (held for 1 min), heated at 10°C/min to 220°C; Gas flow rate: Helium (carrier gas) 1 ml/min; Ion source temperature: 230°C; Ionization method: EI; Mass number being set: m/z = 108.42 (2, 5-DMP and 2, 6-DMP), m/z = 122.42 (2,3,5-TMP)

### Pet Food

A pet food according to an embodiment of the present invention is a pet food produced by the pet food production method described above.

As the moisture content of the pet food, the following range can be exemplified. The moisture content of the pet food according to the embodiment of the present invention is preferably 6 to 12% by mass.

A moisture content of at least 6% by mass can prevent the pet food from being extremely hard or extremely too fragile to maintain its shape. In addition, a moisture content of no greater than 12% by mass allows the aroma components such as pyrazines to moderately evaporate, and can improve flavor of the pet food and consumption by pets.

The pet food of the present invention can be produced by using conventionally known ingredients, according to the above described method.

The pet food of the present invention is consumed by various animals; however, cats and dogs like the pet food and particularly dogs like the pet food.

In order to inform pet owners that the pet food of the present invention is suitable for dogs and cats, when the pet food is packaged for sale, the package can indicate that the pet food is suitable for dogs and cats.

In the present Specification and Claims, "pet" designates animals kept by humans. In a more limited sense, a pet is an animal cherished by an owner.

### EXAMPLES

The present invention is described more in detail hereinafter presenting Examples; however, the present invention is not limited to these Examples.

Kneaded food products were obtained by: adding cereals, meats, fishes, vitamins, an amino acid additive (commercially available amino acid mixture composed of amino acids constituting animal protein) and reducing sugar (hydrous glucose), which are the pet food raw materials, in compositions shown in Table 3; pulverizing by a pulverizer; and kneading by a mixer. It should be noted that, in Table 3, total added amounts of the amino acid additive and the reducing sugar are shown; however, in Example 1 and Comparative Example 1, respective added amounts of the amino acid additive and the reducing sugar are the same.

The cereals include corn, wheat flour, corn gluten meal, and soy. The meats include chicken meal and pork meal. The fishes include fish meal. The vitamins include minerals.

**[Table 3]**

| Unit: parts by mass | Example 1 | Comparative Example 1 | Comparative Example 2 |
|---|---|---|---|
| Cereals | 58 | 58 | 58 |
| Meats | 13 | 13 | 13 |
| Fishes | 12 | 12 | 12 |
| Vitamins | 2 | 2 | 2 |
| Total of pet food raw materials | 85 | 85 | 85 |
| Amino acid additive + Reducing sugar | 3.5 | 3.5 | 0 |
| Total | 88.5 | 88.5 | 85 |
| Baking step | Yes | No | Yes |

An added amount in total of the amino acid and the reducing sugar with respect to the pet food raw materials being 100 parts by mass is 4.1 parts by mass.

The kneaded product thus obtained was granulated to make go-stone shaped food grains of 3 mm to 30 mm in diameter and height (thickness), by using an extruder. During this, heating process at 80 to 120°C was performed to gelatinize starch components.

The food grains thus obtained were subjected to drying process with hot air of 100 to 105°C for 10 to 30 minutes, to thereby obtain respective food grains having moisture contents shown in Table 5.

Thereafter, as shown in FIG. 1, the respective food grains 4 of Example 1 and Comparative Example 2 were placed on a metallic grill and conveyed by the net conveyor 1, and then, in a furnace provided with the ceramic heaters 2 and 3, irradiated with infrared rays from above and below the grill, to thereby bake a food grain 1. More specifically, the temperature of the furnace prior to introduction of the food grains (temperature during empty furnace heating) was in a range of 240 to 260°C; the temperature of the furnace during continuous introduction of the food grains (temperature during grain conveyance) was in a range of 190 to 210°C; and the conveyance speed of the grill by the net conveyor was adjusted such that each food grain was baked for 30 seconds. During this, a distance between the ceramic heaters and the central part of the food grains (L1 and L2) was set to 100 mm. It should be noted that the temperature inside of the furnace (atmospheric temperature) was monitored by a thermometer disposed at a position 30 mm above the grill; laterally away from an end of the grill by 350 mm; and away from a central part of the ceramic heater by 95 mm. The food grains exiting from the furnace after baking were naturally cooled by air during conveyance by the net conveyor. The food grains of Comparative Example 1 were not baked.

The food grains of Example 1 and Comparative Example 2 obtained after baking, and the food grains of Comparative Example 1 after drying by a dryer, were put into the coating reel and stirred in contact with water, to add moisture to the respective food grains to obtain moisture content of 8.5% by mass. Thereafter, the food grains were subjected to a beef tallow coating step.

The pet foods of Example 1 and Comparative Examples 1 and 2 were thus obtained by the above described production method.

### Evaluation of Preference Qualities

The preference qualities (consumption) of the pet foods thus produced were evaluated by the following method. Results are shown in Table 5.

### (Test 1)

In order to determine which of the pet foods of Example 1 and Comparative Example 1 has higher preference qualities, the test was conducted over 2 days with 10 dogs (males and females of 2 to 10 years old) as subjects.

On the first day, each of the dogs was fed simultaneously with the pet foods, 230 g each, the first one from the observer's left and the second one from the observer's right, and 1 hour later amounts consumed by dogs were measured.

Based on a total weight of the pet food consumed by a given dog on the first day, a consumed amount of the pet food of Example and a consumed amount of the pet food of Comparative Example were obtained in percent. A result of the first day was obtained by averaging the amounts in percent obtained from 10 subject dogs.

On the second day, each of the dogs was fed simultaneously with the pet foods, 230 g each, the first one from the observer's right and the second one from the observer's left, and 1 hour later amounts consumed by dogs were measured.

Based on a total weight of the pet food consumed by a given dog on the second day, a consumed amount of the pet food of Example and a consumed amount of the pet food of Comparative Example were obtained in percent. A result of the second day was obtained by averaging the amounts in percent obtained from 10 subject dogs.

Lastly, a ratio of consumed amounts (preference score) was obtained by averaging the results of the first day and the second day. Results are shown in Table 4. A higher value of preference indicates that consumption by the subject dogs was more favorable.

### (Test 2)

The similar test to Test 1 was conducted except for using the pet food of the Comparative Example 2 instead of the pet food of the Comparative Example 1. Results thereof are also shown in Table 4.

**[Table 4]**

| Unit: % | Test 1 | | Test 2 | |
|---|---|---|---|---|
| Pet food | Example 1 | Comparative Example 1 | Example 1 | Comparative Example 2 |
| Preference qualities | 73 | 27 | 57 | 43 |

In Table 4, a higher value of preference score indicates that consumption was more favorable.

The results of Test 1 showed that the pet food of Example 1 was superior in preference qualities to the pet food of Comparative Example 2. These facts also showed that the baking step of the present invention of baking the food grains by infrared rays contributes to improvement of the preference qualities of pet foods.

The results of Test 2 showed that the pet food of Example 1 was superior in preference qualities to the pet food of Comparative Example 2. These facts also showed that the amino acid and the reducing sugar kneaded into the food grains of the present invention contribute to improvement of the preference qualities of pet foods.

Results of Tests 1 and 2 showed that the amino acid and the reducing sugar kneaded into the food grains of the present invention baked by infrared rays contributes to improvement of the preference qualities of pet foods.

### EXPLANATION OF REFERENCE NUMERALS

- 1: Net conveyor (Grill)
- 2, 3: Ceramic heaters
- 4: Food grains

## Claims

1. A pet food production method comprising: a kneading step of adding an amino acid and a reducing sugar to pet food raw materials and kneading to thereby obtain a kneaded food product;
a granulating step of granulating the kneaded food product to thereby obtain food grains; and
a baking step of baking the food grains by infrared rays.

2. The pet food production method according to claim 1, wherein a plurality of types of amino acids is added in the kneading step.

3. The pet food production method according to claim 1 or 2, wherein at least 0.5 parts by mass and no greater than 5.0 parts by mass in total of the amino acid and the reducing sugar with respect to the pet food raw materials being 100 parts by mass is added in the kneading step.

4. The pet food production method according to any one of claims 1 to 3, wherein the food grains are baked, in the baking step, by placing the food grains on a grill and irradiating with infrared rays from above and below the grill.

5. A pet food, wherein the pet food is produced by the pet food production method according to any one of claims 1 to 4.
